Europäisches Patentamt

European Patent Office

Office européen des brevets

(11) Veröffentlichungsnummer: **0 346 598**
**A1**

(12) **EUROPÄISCHE PATENTANMELDUNG**

(21) Anmeldenummer: **89107194.6**

(22) Anmeldetag: **21.04.89**

(51) Int. Cl.⁴: **A47J 42/56 , A47J 43/046 ,**
**A47J 19/02**

(30) Priorität: **11.06.88 DE 3819917**

(43) Veröffentlichungstag der Anmeldung:
**20.12.89 Patentblatt 89/51**

(84) Benannte Vertragsstaaten:
**AT CH DE ES FR IT LI**

(71) Anmelder: **Braun Aktiengesellschaft**
**Rüsselsheimer Strasse 22**
**D-6000 Frankfurt/Main(DE)**

(72) Erfinder: **Hufnagl, Walter**
**Am Holzweg 52**
**D-6231 Sulzbach/Ts.(DE)**

(54) **Haushaltsgerät, insbesondere Saftzentrifuge.**

(57) Nach der Erfindung ist das Sperrelement (7) vom Deckel (4) getrennt und im Geräteunterteil (3) in Verschieberichtung (12) des Deckels (4) verschiebbar gelagert. Das Riegelelement (8) wird von einem quer zur Verschieberichtung (12) des Deckels (4) verschiebbaren, aber in Verschieberichtung (12) des Deckels (4) blockierten Bauteil gebildet, dessen Verschiebung der Sperriegel (5) in Offenstellung des Gerätes (1) zuläßt und in Schließstellung verhindert. In Schließstellung ist das Riegelelement (8) mit dem Deckel (4) formschlüssig verbunden.

FIG.1

EP 0 346 598 A1

## Haushaltsgerät, insbesondere Saftzentrifuge

Die Erfindung betrifft ein Haushaltsgerät, insbesondere Saftzentrifuge, mit elektrisch angetriebenem, rotierenden Werkzeug, das einen auf das Geräteunterteil aufsetzbaren und vor Betriebsbeginn mit diesem verriegelbaren und das Werkzeug einschließbaren Deckel umfaßt, wobei die Deckelverriegelung einen Sperriegel in Form eines doppelarmigen Hebels aufweist, der um eine im Haushaltsgerät angeordnete Lageranordnung schwenkbar ist und der sowohl mit vom Deckel verschiebbaren Sperrelementen als auch den Deckel verschließenden Riegelelementen zusammenwirkt und der über einen mit einem das Gerät ein- und ausschaltenden Geräteschalter gekoppelt ist, derart, daß das Einschalten des Geräteantriebs durch den Geräteschalter allein in der Schließstellung des den Deckel am Geräteunterteil festlegenden Sperriegels möglich ist, daß bei abgenommenem Deckel der Sperriegel nicht aus seiner Ausschaltstellung bewegbar ist, wobei die freien Enden des Sperriegels nach dem Verschieben der in dessen Schwenkebene gelangenden Sperrelemente durch Niederdrücken des Deckels auf den Geräteunterteil mit den sodann in den Verriegelungsbereich gelangenden Riegelelementen im Verriegelungssinne zusammenwirken.

Ein derartiges Haushaltsgerät ist bereits aus der DE-OS 31 49 072, insbesondere aus den Figuren 1 bis 4, bekannt. Bei dieser Saftzentrifuge ist es als weniger vorteilhaft anzusehen, daß man zum Verschließen des Deckels zwei Hände benötigt, nämlich indem man mit der einen Hand den Deckel herunterdruckt, wodurch die Riegelelemente erst eine Verdrehung des Sperriegels freigeben, und mit der anderen Hand den Schalter und somit den Sperriegel derart verdreht, daß er mit seinen freien Enden in die an den Riegelelementen ausgebildeten Ausnehmungen einfahren kann. Erst dann kann der Schalter durch Weiterdrehung in seine Schaltstellung II weitergedreht werden, wodurch der Antriebsmotor des Gerätes in Gang gesetzt wird. Dies ist jedoch nur dadurch möglich, daß ein am Schalter ausgebildeter Stellzapfen in eine am Sperriegel ausgebildete Ausnehmung derart eingreift, daß erst, wenn die Schaltstellung I erreicht ist, die Kulisse ein Weiterdrehen des Schalters ermöglicht. Diese Kulissen-Stellzapfen-Anordnung hat den Nachteil, daß sie besonders stabil ausgelegt sein muß, wenn sie nicht frühzeitig ausfallen soll. Es müßten also daher in diesem Bereich metallische Werkstoffe eingesetzt werden, die bei der sonst aus Kunststoff hergestellten Verriegelungseinrichtung diese aufwendige und somit auch erheblich teuer werden lassen. Ein weiterer Nachteil besteht darin, daß am Deckel verhältnismäßig lange Riegelelemente angeformt sein müssen, die eine aufwendige und teure Herstellung verursachen.

Aufgabe der Erfindung ist es daher, eine Verriegelungseinrichtung für ein Haushaltsgerät zu schaffen, die kostengünstiger, einfacher herstellbar, bedienungsfreundlicher und robuster ist.

Diese Aufgabe wird erfindungsgemäß dadurch gelöst, daß das Sperrelement vom Deckel getrennt ist und im Geräteunterteil in Verschieberichtung des Deckels verschiebbar gelagert ist, daß das Riegelelement von einem quer zur Verschieberichtung des Deckels verschiebbares, aber in Verschieberichtung des Deckels blockiertes Bauteil gebildet wird, dessen Verschiebung der Sperriegel in Offenstellung des Gerätes zuläßt und in Schließstellung verhindert und daß in Schließstellung das Riegelelement mit dem Deckel formschlüssig verbunden ist. Durch diese erfindungsgemäße Anordnung wird also eine Ein-Handbedienung ermöglicht, indem zunächst nur mit einer Hand der Deckel soweit heruntergedrückt wird, bis eine Verriegelung des Deckels über das Riegelelement erfolgt und dabei gleichzeitig das Sperrelement vom Deckel soweit heruntergedrückt worden ist, daß er den Sperriegel entriegelt hat. Anschließend kann mit der gleichen Hand der Geräteschalter und somit auch der Sperriegel verdreht werden, so daß dabei von ihm der elektrische Schalter in seine Einschaltstellung gelangt und das Gerät in Betrieb gesetzt wird. Da dieser Verriegelungsanordnung keine besonders hochfesten Bauteile erforderlich macht, können diese aus Kunststoff besonders preisgünstig und einfach hergestellt werden.

In einer Weiterbildung der Erfindung ist vorgesehen, daß der Sperriegel von einem Ring gebildet und an dessen gegenüberliegenden Seiten Vorsprünge ausgebildet sind, wobei deren freie Enden bei Drehung des Sperriegels in Eingriff mit den Riegelelementen bringbar sind. Durch die ringförmige Ausbildung des Sperriegels wird dieser besonders biegesteif und daher kann von ihm eine hohe Lebensdauer erwartet werden. Die ringförmige Ausbildung des Sperriegels ermöglicht erfindungsgemäß weiterhin eine vom Zentrum außerhalb am Geräteunterteil angeordnete Lagerung des Sperriegels, so daß die Antriebswelle des Antriebsmotors im Zentrum das Gehäuseunterteil zum Deckel hin durchdringen kann, was zu einer besonders einfachen Anordnung der Bauteile des Haushaltsgerätes führt.

Da die Sperr- und Riegelelemente, in radialer Richtung des Haushaltsgerätes gesehen, nahezu auf einer gemeinsamen Linie liegen, müssen die Vorsprünge die Sperrelemente umgreifen, um mit dem Riegelelement zusammenwirken zu können. Aus diesem Grund ist es besonders vorteilhaft, wenn die Vorsprünge von die Sperrelemente umgebenden Langlöchern gebildet werden, so daß auch diese besonders haltbar gestaltet werden können.

Es ist vorteilhaft, daß das Sperrelement eine Ausnehmung aufweist, in die erst nach seinem Verschieben in die Schließstellung eine am Sperriegel ausgebildete Rastnase eingedreht werden kann. Dabei ist die Ausnehmung im Querschnitt halbkreisförmig ausgebildet und verläuft nur soweit in Verschieberichtung nach unten, daß bei abgenommenem Deckel die am Sperriegel ausgebildete Rastnase bei Verdrehung des Sperriegels nicht in diese Ausnehmung einfahren kann, sondern an dem sonst kreiszylindrischen Schaftdurchmesser des Sperrelements anschlägt.

Um ein Lösen des Deckels vom Riegelelement nach dem Betrieb des Haushaltsgerätes zu ermöglichen, ist am Riegelelement ein Betätigungsknopf ausgebildet, der von außen zugänglich ist. Besonders vorteilhaft ist es, wenn der Betätigungsknopf die Wandung des Gehäuseunterteils über eine Bohrung nach außen durchdringt, da er hierdurch besonders leicht zugänglich ist.

Ein besonders gleichmäßiges Verschließen des Deckels, ohne unerwünschte Spannungen im Deckel hervorzurufen, wird dadurch erreicht, daß zu beiden Seiten am Gehäuseunterteil diametral gegenüberliegend je ein Betätigungsknopf ausgebildet ist. Durch diese Anordnung wird weiterhin erreicht, daß die zum Entriegeln des Deckels erforderliche Lösekraft halbiert wird.

Besonders einfach läßt sich das Riegelelement herstellen, wenn es von einem einarmigen Hebel gebildet wird, dessen freies, ausschwenkbares Ende die Verriegelung mit dem Deckel herstellt. Um eine leichte Montage des Riegelelements im Geräteunterteil zu ermöglichen und gleichzeitig eine einfache, in Verschieberichtung des Deckels ortsfeste Halterung zu ermöglichen, wird vorgeschlagen, daß am freien Ende eine radial nach außen gerichtete Erhebung ausgebildet ist, die in eine am Geräteunterteil und eine am Deckel entsprechend ausgebildete Ausnehmung eingreift. Durch diese erfindungsgemäße Anordnung ist das Riegelelement in Verschieberichtung des Deckels gesichert, jedoch in Schwenkrichtung leicht drehbar, wobei der Drehpunkt des Riegelelements bzw. des Hebels von seinem dem freien Ende gegenüberliegenden Ende gebildet wird.

Um eine Verschiebung des Sperrelements zum Zwecke der Ent- bzw. Verriegelung zu ermöglichen, ist in vorteilhafter Weise vorgesehen, daß das Sperrelement das Gehäuseunterteil zum Deckel hin durchdringt und von einem vom Deckel betätigbares Bauteil in Verschieberichtung entgegen der Kraft eines Federelements verschiebbar ist. Auch hier sind die beiden Sperrelemente soweit radial voneinander entfernt, daß eine Betätigung mit nur einer Hand ohne aufgesetzten Deckel nicht möglich ist. Im Durchdringungsbereich des Sperrelements durch das Gehäuseunterteil müssen beide Teile gegeneinander gedichtet sein, damit Flüssigkeiten nicht in das Gehäuseinnere eintreten können.

Eine besonders einfache Betätigung der Sperrelemente wird dadurch erreicht, wenn zwischen dem Deckel und den Sperrelementen ein Saftbehälter ausgebildet ist, der bei Verschiebung des Deckels diese Verschiebung auf die Sperrelemente überträgt.

Damit der einarmige Hebel stets radial nach außen gedrückt wird, um ein selbsttätiges Verriegeln beim Herunterdrücken des Deckels zu erreichen, ist vorgesehen, daß an dem einarmigen Hebel eine Feder angreift, die den einarmigen Hebel mit Vorspannung stets radial nach außen drückt.

Ein Ausführungsbeispiel der Erfindung ist in der Zeichnung dargestellt und wird im folgenden näher beschrieben. Es zeigen:

Fig. 1 Teillängsschnitt durch eine nach der Erfindung hergestellte Saftzentrifuge,

Fig. 2 Ansicht gemäß der Schnittführung II-II nach Fig. 1, wobei die Verriegelungseinrichtung ihre Offenstellung einnimmt und

Fig. 3 Ansicht gemäß der Schnittführung II-II nach Fig. 1, wobei jedoch gegenüber Fig. 2 die Verriegelungseinrichtung ihre Schließstellung eingenommen ist.

Die Saftzentrifuge 1 besteht aus einem zur Montageerleichterung aus zwei Teilen 26, 27 bestehenden Gehäuseunterteil 3, in dem der zentral angeordnete Antriebsmotor 11 (hier ist nur der Rotor 34 mit Antriebswelle 28 und ein Teil des Stators, nämlich das Kalottenlager 29, dargestellt) befestigt ist. Oberhalb des Kalottenlagers 29 ist an der Antriebswelle 28 eine Längsverzahnung 30 ausgebildet, auf die ein mit dem Siebkorb 2 in drehfestem Eingriff stehendes Kupplungselement 31 aufgeschrumpft ist (die drehfeste Verbindung zwischen dem Kupplungselement 31 und dem Siebkorb 2 ist in der Zeichnung nicht dargestellt).

Der Siebkorb 2 besteht aus einem scheibenförmigen Bodenteil 32 mit an seiner Oberseite ausgebildeten Reibelementen 35, an das sich an seinem Außenumfang kegelig nach oben und nach außen erweiternd das Siebteil 33 (Durchgangslöcher sind hier nicht dargestellt) anschließt. An das in der Zeichnung obere Ende des Siebteils 33 schließt sich ein den Siebkorb 2 nach oben begrenzender Abschlußring 36 an. Der Abschlußring 36 und das Bodenteil 33 bestehen aus Kunststoff und sind an den Rand des Siebteils 33 angeformt.

Radial außerhalb des das Werkzeug darstellenden Siebkorbes 2 ist ein nach oben offener, topfförmiger Saftbehälter 25 angeordnet, der den Siebkorb 2 kreisförmig umgibt und der im Bereich des Kupplungselements 31 einen nach oben gerichteten, ringförmigen Hals 36 mit einer im Querschnitt kreisförmigen Bohrung 37 umgibt. Der Hals 36 dient dazu, daß zum einen eine Verbindung vom Siebkorb 2 zum Kupplungselement 31 hergestellt werden kann und zum anderen die beim Entsaften in den Saftbehälter 25 gelangende Flüssigkeit nicht in das Motorgehäuse 38 gelangt. Aus diesem Grund darf der Saft im Behälter 25 nicht höher stehen als die Länge des Halses 36 ist.

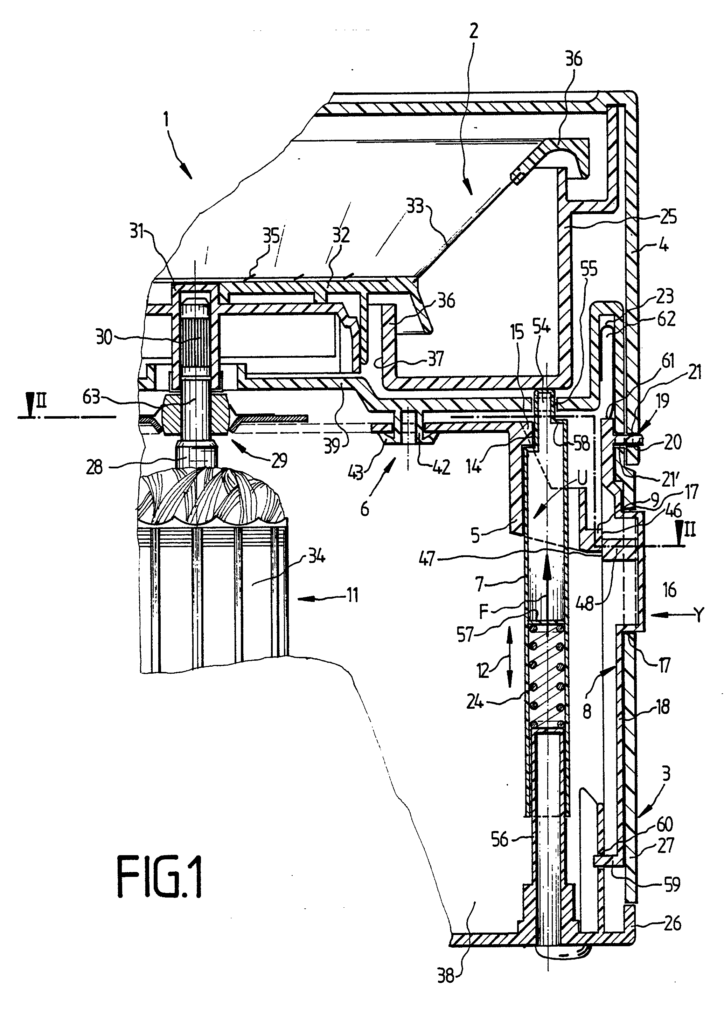

Der Siebkorb 2 und der Behälter 25 sind gemäß Fig. 1 von oben über einen Deckel 4 verschlossen, um während des Betriebs ein Eingreifen von Hand in den Siebkorb 2 zu vermeiden. Der Deckel 4 weist an seinem oberen Abschnitt einen in der Zeichnung nicht dargestellten Einfüllschacht auf, über den die zum Entsaften vorgesehenen Früchte eingegeben werden. Der Querschnitt des Einfüllschachts ist so klein bemessen, daß ein Benutzer nicht mit seiner Hand die Einfüllöffnung durchdringen kann. Die Einfüllöffnung liegt bei aufgesetztem Deckel 4 senkrecht über den Reibelementen 35.

Nach Fig. 1 ist unterhalb des Behälters 25 eine das Geräteunterteil 3 nach oben verschließende Trennwand 39 ausgebildet, die das Motorgehäuse 38 nach oben begrenzt.

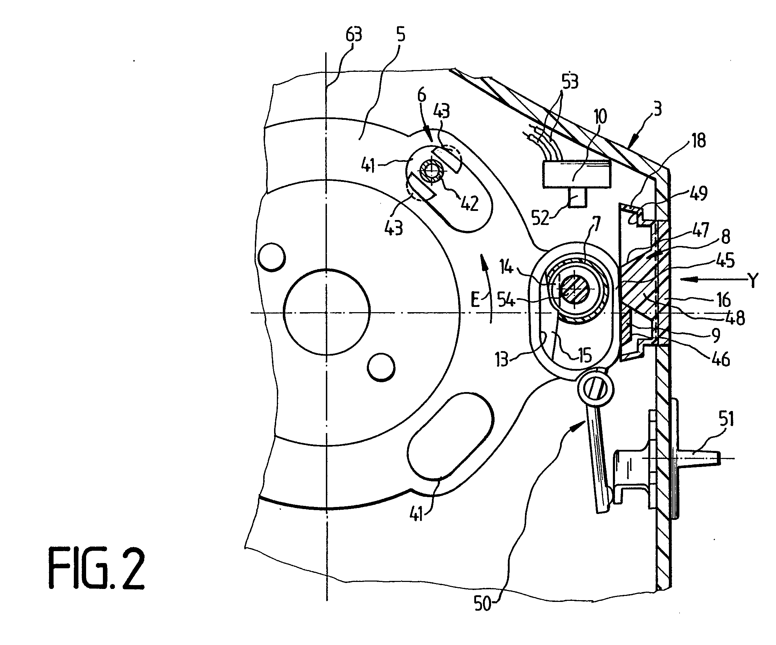

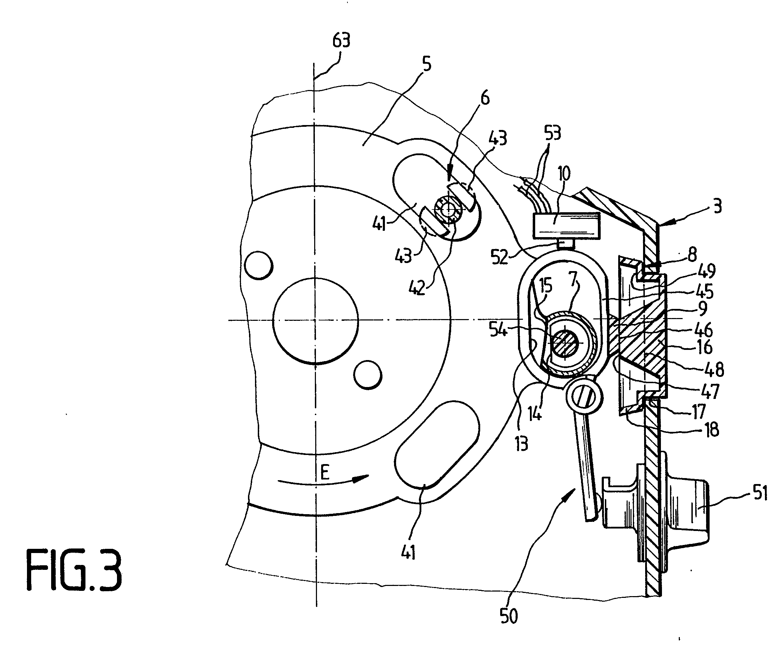

Zu beiden Seiten ist im Motorgehäuse 38 die Verriegelungseinrichtung ausgebildet. Gemäß den Fig. 1 bis 3 besteht die Verriegelungseinrichtung aus dem ringförmigen Sperriegel 5, der vier am Umfang gleichmäßig verteilte, konzentrisch zur Mittellinie ver laufende, ovale Ausnehmungen 41 aufweist. Die Ausnehmungen 41 werden gemäß Fig. 1 von der Trennwand 39 nach unten hervorstehenden Zapfen 42 durchdrungen, die an ihrem freien Ende radiale Erweiterungen 43 aufweisen, die an der Unterseite des Sperriegels 5 anliegen und somit den Sperriegel 5 gegenüber der Trennwand 39 auf konstantem Abstand halten. Die Erweiterungen 43 sind so bemessen, daß sie beim Aufschieben des Sperriegels 5 mit diesem eine Schnappverbindung bilden. Der Einfachheit halber ist diese Lageranordnung 6 in den Figuren 2 und 3 in der unteren Ausnehmung 41 nicht dargestellt.

Der Sperriegel 5 weist nach den Fig. 1 bis 3 eine zentrale Bohrung 44 auf, die so groß bemessen ist, daß das Kalottenlager 29 und Teile des Geräteantriebs 11 diese durchdringen können.

Gemäß den Figuren 1 bis 3 ist zwischen zwei gegenüberliegenden Ausnehmungen 41 radial außerhalb am Riegelelement 5 ein Langloch 13 ausgebildet, das von dem Sperrelement 7 durchdrungen wird. An der radial äußeren Wandung 45 des Langlochs 13 ist am freien Ende 9 eine Anschlagfläche 46 ausgebildet, die mit einer ihr gegenüberliegenden Anschlagfläche 47 des Riegelements 8 fluchtet bzw. auf gleicher Höhe liegt, wenn, wie dies in Fig. 3 dargestellt ist, der Betätigungsknopf 16 aus dem Gehäuseunterteil 3 nach außen herausragt. In dieser Stellung kann, wenn auch die Sperrelemente 7 gemäß Fig. 1 nach unten verschoben sind, der Sperriegel 5 verdreht werden. Ist beispielsweise, wie dies Fig. 2 zeigt, der Betätigungsknopf 16 in Richtung Y verschoben, d.h., der Deckel 4 ist nicht ordnungsgemäß mit seiner Ausnehmung 21 in die am Riegelelement 8 ausgebildete Erhebung 20 (Fig. 1) eingerastet, so kann der Sperriegel 5 nicht gemäß der Drehrichtung E in die Verriegelungsstellung gebracht werden, da die beiden Anschlagflächen 46, 47 nicht mehr fluchten, sondern gegeneinander derart versetzt sind, daß das freie Ende 9 am Steg 48 anschlägt (Fig. 2). Der Betätigungsknopf 16 erweitert sich über die Stufe 49 im Motorgehäuse 38 radial nach außen, damit dieser einen Anschlag mit dem Gehäuseunterteil 3 bildet und somit nicht nach außen herausfallen kann.

Die Wandung des Langlochs 13 ist über ein Winkelgetriebe 50 (Fig. 2 und 3) verbunden, das wiederum mit einem am Gehäuse des Geräteunterteils 3 befestigten und von außen zugänglichen Drehschalter 51 verbunden ist. Auf gleicher Höhe wie der Sperriegel 5 ist in Fig. 2 und 3 am Geräteunterteil 3 ein Geräteschalter 10 befestigt, der über einen aus dem Gehäuse herausragenden Betätigungsstift 52 ein- bzw. ausschaltbar ist, wodurch die Stromversorgung über die Anschlußkabel 53 von der Stromquelle zum Geräteantrieb 11 steuerbar ist.

Nach Fig. 1 ist in Schließstellung des Sperrelements 2 in Höhe der Ausnehmung 14 eine in die Ausnehmung 14 hineinragende Rastnase 15 ausgebildet (s. auch Fig. 3). Die in Fig. 2 dargestellte Offenstellung der Saftzentrifuge 1 zeigt deutlich, daß die Rastnase 15 vor der Ausnehmung 14 angeordnet ist, also erst bei Verdrehung des Sperriegels in Drehrichtung E in die Ausnehmung 14 eingreift, wie dies deutlich die Fig. 1 und 3 zeigen. Das Langloch 13 hat auch die Aufgabe, das als Hülse ausgebildete Sperrelement 7 an seinem freien Ende über den Sperriegel 5 an der Trennwand 39 zu führen.

In Fig. 1 ist am oberen Ende des Sperrelements 7 ein konzentrisch zum Sperrelement verlaufender, im Durchmesser kleinerer Zapfen 54 angeformt, der eine in der Trennwand 39 ausgebildete Bohrung 55 durchdringt und am Boden des Behälters 25 anliegt und von diesem in der Verschieberichtung 12 nach unten gegen die Kraft F des als Spiralfeder ausgebildeten Federelements 24 gedrückt wird (Schließstellung). Das Federelement 24 schlägt an einem am Teil 26 angeformten, in das Motorgehäuse 38 nach oben hineinragenden Stehbolzen 56 und an einem Anschlag 57 in dem Sperrelement 7 an. Das Sperrelement 7 ist teleskopartig auf den Stehbolzen 56 derart aufgeschoben, daß stets von dem Federelement 24 eine nach oben gerichtete Kraft F auf das Sperrelement 7 ausgeübt wird und somit, wenn das Sperrelement 7 nicht vom Behälter 25 gemäß Fig. 1 nach unten gedrückt wird, stets mit seiner Stufe 58 an der Unterseite der Trennwand 39 anschlägt. Nur die zweiteilige Ausbildung des Gehäuseunterteils 3 ermöglicht daher die Montage des Sperrelements 7 auf dem Stehbolzen 56, so daß nach Montage das Sperrelement 7 zwischen dem Stehbolzen 56 und der Bohrung 55 gefesselt bzw. zentriert ist.

Das Riegelelement 8 besteht in Fig. 1 aus einem im wesentlichen geradlinigen Hebel, der in seinem unteren Bereich mittels eines Winkelstücks 59 in eine am Teil 3 ausgebildete Öffnung 60 eingreift, was gleichzeitig die Drehpunktlagerung des Riegelelements 8 darstellt. Das Riegelelement 8 liegt im wesentlichen in Betriebsstellung an der Wandung des Teils 27 des Gehäuseunterteils 3 an. Am freien Ende 19 des Riegelelements 8 springt eine horizontal verlaufende Erhebung 20 radial nach außen hervor, die in eine am Teil 27 entsprechend ausgebildete Ausnehmung 21 eingreift und diese sogar nach außen durchdringt, so daß beim Aufsetzen des Deckels 4 diese Erhebung 20 auch in die am Deckel 4 ausgebildete Ausnehmung 21 eingreift, wie dies in Fig. 1 dargestellt ist. Gleichzeitig nimmt die Erhebung 20 eine Blattfeder 23 auf, die mittels eines Vorsprungs 61 am Riegelelement 8 befestigt ist. Die Blattfeder 23 ist in einem Sackloch 62 mittels eines U-förmigen Bogens gehaltert. Bei Verdrehung des Riegelelements 8 um die Lagerung 59, 60 in Richtung U wird die Blattfeder 23 der art vorgespannt, daß bei Loslassen des Riegelelements 8 dieses wieder in seine in Fig. 1 dargestellte Sperrstellung zurückfedert.

Zur Vermeidung von Wiederholungen sind in den Fig. 1 bis 3 für entsprechend gleiche Bauteile gleiche Bezugszeichen verwendet. Da die Verriegelungseinrichtung, wie sie in den Fig. 2 und 3 dargestellt ist, um die Achse 63 symmetrisch ausgebildet ist, so versteht es sich von selbst, daß diese Anordnung links von der Achse 63 entsprechend gleich ausgebildet ist, was aber in den Zeichnungen nicht dargestellt ist.

Die Wirkungsweise der erfindungsgemäßen Verriegelungseinrichtung der Saftzentrifuge ist folgende:

Wird der Behälter 25 vom Deckel 4 nicht nach unten gedrückt, so schlägt die Stufe 58 des Sperrelements 7 an der Unterseite der Trennwand 39 durch die Kraft der Feder 24 an (Fig. 1). Hierdurch ist es nicht möglich, die Rastnase 15 in die Ausnehmung 14 des Sperrelements 7 einzubringen, da bei nicht niedergedrücktem Sperrelement 7 das in Fig. 1 untere Ende der Ausnehmung 14 in den Wirkungsbereich der Rastnase 15 gelangt (nicht dargestellt).

Wird nun der Deckel 4 gemäß Fig. 1 von oben nach unten gedrückt, so verschiebt dieser den Saftbehälter 25, der wiederum über den Zapfen 54 das Sperrelement 7 nach unten bewegt. Dabei gelangt nun die Rastnase 15 in den vollen Wirkungsbereich der Ausnehmung 14. Gleichzeitig wird die Erhebung 20 vom Deckel 4 radial nach innen bewegt, bis die Ausnehmung 21 die Höhe der Erhebung 20 erreicht hat und diese in die Ausnehmung 21 durch die Kraft der Feder 23 federnd einrasten kann. Nun ist der Deckel formschlüssig mit der Saftzentrifuge 1 verbunden, und der Siebkorb 2 ist nicht mehr von Hand zugänglich. Das Gerät hat seine Bereitschaftsstellung er reicht. Wird nun der Drehschalter 51 so gedreht, daß er über das Winkelgetriebe 50 den Sperriegel 5 in Drehrichtung E verdreht, so greift die Rastnase 15 in die Ausnehmung 14 ein. Gleichzeitig legt sich die Anschlagfläche 46 an der Anschlagfläche 47 des Riegelelements 8 an, so daß eine Verschwenkung des Riegelelements 8 in Richtung U durch den Sperriegel 5 ausgeschlossen ist. Gleichzeitig schlägt die Wandung des Langlochs 13 an dem Betätigungsstift 52 an und verschiebt ihn gemäß Fig. 3 solange in das Gehäuse des Geräteschalters 10 hinein, bis dieser eine Verbindung vom Stromnetz über die Anschlußkabel 53 zum Geräteantrieb 11 herstellt.

Die Saftzentrifuge 1 hat ihre Betriebsstellung erreicht, und der Geräteantrieb 11 treibt mit hoher Umfangsgeschwindigkeit den Siebkorb 2 an. In dieser Stellung ist der Deckel 4 nicht mehr vom Gerät 1 abnehmbar. Nun können über den nicht dargestellten Einfüllschacht Früchte eingegeben werden, die an den Reibelementen 35 zerkleinert und an die radial äußere Wandung des siebteils 33 geschleudert, wo der Saft durch die nicht dargestellten Siebkorböffnungen durchtritt, während der Trester im Siebkorb 2 verbleibt und nach oben aus einem Tresterauslaß nach außen wandert.

Wird nach Beendigung des Entsaftens der Motor durch Ausschalten des Geräteschalters 10 beendet, so muß über den Drehschalter 51 der Sperriegel 5 entgegen der Drehrichtung E zurückgedreht werden. Nachdem also der Geräteantrieb 11 bereits ausgeschaltet ist, gibt das freie Ende 9 die Anschlagfläche 47 und die Rastnase 15 die Ausnehmung 14 frei, so daß das Riegelelement 8 in Betätigungsrichtung U eingeschwenkt werden kann, und der Deckel 4 aus der Erhebung 20 gleitet und diese den Deckel 4 zur Entnahme von der Saftzentrifuge 1 freigibt.

**Ansprüche**

1. Haushaltsgerät (1), insbesondere Saftzentrifuge, mit elektrisch angetriebenem, rotierenden Werkzeug (2), das einen auf das Geräteunterteil (3) aufsetzbaren und vor Betriebsbeginn mit diesem verriegelbaren und das Werkzeug einschließbaren Deckel (4) umfaßt, wobei die Deckelverriegelung einen Sperriegel (5) in Form eines doppelarmigen Hebels aufweist, der um eine im Haushaltsgerät angeordnete Lageranordnung (6) schwenkbar ist und der sowohl mit vom Deckel (4) verschiebbaren Sperrelementen (7) als auch den Deckel (4) verschließenden Riegelelementen (8) zusammenwirkt und der über einen mit einem das Gerät (1) ein- und ausschaltenden Geräteschalter (10) gekoppelt ist, derart, daß das Einschalten des Geräteantriebs (11) durch den Geräteschalter (10) allein in der Schließstellung des den Deckel (4) am Geräteunterteil (3) festlegenden Sperriegels (5) möglich ist, daß bei abgenommenem Deckel (4) der Sperriegel (5) nicht aus seiner Ausschaltstellung bewegbar ist, wobei die freien Enden (9) des Sperriegels (5) nach dem Verschieben der in dessen Schwenkebene gelangenden Sperrelemente (7) durch Niederdrücken des Deckels (4) auf das Geräteunterteil (3) mit den sodann in den Verriegelungsbereich gelangenden Riegelelementen (8) im Verriegelungssinne zusammenwirken,
**dadurch gekennzeichnet,**
daß das Sperrelement (7) vom Deckel (4) getrennt ist und im Geräteunterteil (3) in Verschieberichtung (12) des Deckels (4) verschiebbar gelagert ist, daß das Riegelelement (8) von einem quer zur Verschieberichtung (12) des Deckels (4) verschiebbares, aber in Verschieberichtung (12) des Deckels (4) blockiertes Bauteil gebildet wird, dessen Verschiebung der Sperriegel (5) in Offenstellung des Gerätes (1) zuläßt und in Schließstellung verhindert und daß in Schließstellung das Riegelelement (8) mit dem Deckel (4) formschlüssig verbunden ist.

2. Haushaltsgerät nach Anspruch 1,
**dadurch gekennzeichnet,**
daß der Spierriegel (5) von einem Ring gebildet wird, an dessen gegenüberliegenden Seiten Vorsprünge (13) ausgebildet sind, deren freie Enden (9) bei Drehung des Sperriegels (5) in Eingriff mit den Riegelelementen (8) bringbar sind.

3. Haushaltsgerät nach Anspruch 2,
**dadurch gekennzeichnet,**
daß die Vorsprünge (13) von Langlöchern gebildet werden, die die Sperrelemente (7) umgreifen.

4. Haushaltsgerät nach Anspruch 1,
**dadurch gekennzeichnet,**
daß das Sperrelement (7) eine Ausnehmung (14) aufweist, in die erst nach seinem Verschieben in die Schließstellung eine am Sperriegel (5) ausgebildete Rastnase (15) eingedreht werden kann.

5. Haushaltsgerät nach Anspruch 1,
**dadurch gekennzeichnet,**
daß an dem Riegelelement (8) ein Betätigungsknopf (16) ausgebildet ist, der von außen zugänglich ist.

6. Haushaltsgerät nach Anspruch 5,
**dadurch gekennzeichnet,**
daß der Betätigungsknopf (16) die Wandung des Gehäuseunterteils (3) über eine Bohrung (17) durchdringt.

7. Haushaltsgerät nach Anspruch 6, .
**dadurch gekennzeichnet,**
daß zu beiden Seiten am Gehäuseunterteil (3) diametral gegenüberliegend ein Betätigungsknopf (16) ausgebildet ist.

8. Haushaltsgerät nach Anspruch 5,
**dadurch gekennzeichnet,**
daß das Riegelelement (8) von einem einarmigen Hebel gebildet wird, dessen freies, ausschwenkbares Ende (19) die Verriegelung mit dem Deckel (4) herstellt.

9. Haushaltsgerät nach Anspruch 7,
**dadurch gekennzeichnet,**
daß am freien Ende (19) des Sperrelements (7) eine radial nach außen gerichtete Erhebung (20) ausgebildet ist, die in eine am Geräteunterteil (3) und eine am Deckel (4) entsprechend ausgebildete Ausnehmung (21, 21´) eingreift.

10. Haushaltsgerät nach Anspruch 1,
**dadurch gekennzeichnet,**
daß das Sperrelement (7) das Gehäuseunterteil (3) zum Deckel (4) hin durchdringt und von einem vom Deckel (4) betätigbares Bauteil (22) in Verschieberichtung (12) entgegen der Kraft (F) eines Federelements (24) verschiebbar ist.

11. Haushaltsgerät nach Anspruch 9,
**dadurch gekennzeichnet,**
daß das Bauteil (22) ein den Saft aufnehmender Behälter (25) ist.

12. Haushaltsgerät nach Anspruch 7,
**dadurch gekennzeichnet,**
daß an dem einarmigen Hebel (18) eine Feder (23) angreift, die den einarmigen Hebel (18) mit Vorspannung stets radial nach außen drückt.

05464

FIG.1

FIG.2

EP 0 346 598 A1

05464

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | EP-A-4987 (BRAUN AG) <br> * Seite 7, Zeile 5 - Seite 8, Zeile 35; Figuren 3-10 * <br> --- | 1 | A47J42/56 <br> A47J43/046 <br> A47J19/02 |
| A | EP-A-129222 (MOULINEX S.A.) <br> * Seite 4, Zeile 1 - Seite 5, Zeile 33; Figuren 1-7 * <br> --- | 1 | |
| A | DE-B-1205663 (BAUMGARTEN K.G.) <br> * das ganze Dokument * <br> --- | 1 | |
| A,D | DE-A-3149072 (BRAUN AG) <br> * das ganze Dokument * <br> ----- | 1, 2 | |
| | | | **RECHERCHIERTE SACHGEBIETE (Int. Cl.4 )** <br><br> A47J <br> F16P |

Der vorliegende Recherchenbericht wurde für alle Patentansprüche erstellt

| Recherchenort | Abschlußdatum der Recherche | Prüfer |
|---|---|---|
| DEN HAAG | 23 AUGUST 1989 | MEINDERS H. |